Europäisches Patentamt

European Patent Office

Office européen des brevets

(19)

(11) Veröffentlichungsnummer: **0 310 856**
**A2**

## (12) EUROPÄISCHE PATENTANMELDUNG

(21) Anmeldenummer: **88115418.1**

(22) Anmeldetag: **21.09.88**

(51) Int. Cl.⁴: **A01B 49/06**

(30) Priorität: **09.10.87 DE 3734194**
**10.11.87 DE 3738134**

(43) Veröffentlichungstag der Anmeldung:
**12.04.89 Patentblatt 89/15**

(84) Benannte Vertragsstaaten:
**DE FR GB**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Dreyer, Heinz, Dipl.-Ing.**
**Amazonenwerk 7**
**D-4507 Hasbergen(DE)**

(54) **Landwirtschaftliche Bestellkombination.**

(57) Landwirtschaftliche Bestellkombination, bestehend aus einem Bodenbearbeitungsgerät (1), einer hinter dem Bodenbearbeitungsgerät angeordneten Nachlaufwalze (2), welche über Tragarme (5) derart mit dem vorlaufenden Bodenbearbeitungsgerät verbunden ist, daß sich das Bodenbearbeitungsgerät gegenüber der Nachlaufwalze in einem gewissen Maße frei nach oben bewegen kann, sowie einer abnehmbaren aufgesattelten Sämaschine (3), deren Dosierorgan durch ein auf dem Boden abrollendes Element (21, 38) angetrieben wird, wobei die Sämaschine auf verschiedenartig ausgebildeten Bodenbearbeitungsgeräten mit verschiedenen Nachlaufwalzen aufsattelbar ist. Um die bekannte Bestellkombination erheblich zu verbessern, ist vorgesehen, daß die Sämaschine auf die Nachlaufwalzen direkt aufsattelbar ist, daß die Sämaschine mittels Kupplungselementen (16) mit der Nachlaufwalze bzw. deren Tragarme oder Tragrahmen kuppelbar ist, daß die Sämaschine auf verschiedenartig ausgebildete Nachlaufwalzen unmittelbar aufsattelbar ist, wobei je nach Ausbildung der Nachlaufwalze das Dosierorgan der Sämaschine von der Nachlaufwalze oder von einem zusätzlichen, auf dem Boden abrollenden Rad oder von einer anderen, vorzugsweise mit einer elektronischen, wegabhängigen Regelung regel- oder steuerbaren Kraftquelle angetrieben wird.

EP 0 310 856 A2

FIG. 1

## Landwirtschaftliche Bestellkombination

Die Erfindung betrifft eine landwirtschaftliche Bestellkombination gemäß des Oberbegriffes des Patentanspruches 1.

Eine derartige landwirtschaftliche Bestellkombination ist durch den Prospekt "Accord Pneumatic Drillmaschinen" mit dem Druckvermerk D 2441-1185 bekannt.

Bei dieser bekannten landwirtschaftlichen Bestellkombination ist die Sämaschine auf dem Bodenbearbeitungsgerät aufgesattelt und das Bodenbearbeitungsgerät ist gegenüber der Nachlaufwalze in einem gewissen Maße frei nach oben bewegbar angeordnet, so daß, wenn das Bodenbearbeitungsgerät über im Boden festsitzende Hindernisse hinweggezogen wird nur das Bodenbearbeitungsgerät angehoben wird, wobei die Nachlaufwalze noch weiterhin Bodenkontakt behält. Da nun die Sämaschine auf dem Bodenbearbeitungsgerät aufgesattelt ist, müssen die Bodenbearbeitungswerkzeuge, wenn sie auf im Boden festsitzende Hindernisse auftreffen und über diese hinweggezogen werden, nicht nur das Gewicht des Bodenbearbeitungsgerätes kurzzeitig tragen, sondern auch das Gewicht der Sämaschine. Aufgrund dieser hohen Belastung (Gewicht des Bodenbearbeitungsgerätes plus Gewicht der Sämaschine plus Gewicht des sich im Vorratsbehälter befindlichen Materiales) kommt es sehr häufig zu Brüchen oder anderen Beschädigungen der Zinken sowie der Antriebsorgane der Bodenbearbeitungswerkzeuge des Bodenbearbeitungsgerätes.

Das Dosierorgan der bekannten Sämaschine wird, wenn es auf ein Bodenbearbeitungsgerät aufgesattelt ist, durch ein nachlaufendes Sporenrad angetrieben. Es ist bei dieser bekannten Sämaschine, wenn sie aufgesattelt ist, nur diese eine Antriebsmöglichkeit vorgesehen.

Diese Sämaschine ist starr mit dem Bodenbearbeitungsgerät gekoppelt und weist ein antreibbares Gebläse auf, wobei das von einem Dosierorgan aus dem Vorratsbehälter der Sämaschine dosierte Saatgut mit Hilfe des von dem Gebläse erzeugten Luftstromes zu den Säscharen gefördert wird. Da die starr auf dem Bodenbearbeitungsgerät ausgesattelte Sämaschine sich nicht in Höhenrichtung gegenüber dem Bodenbearbeitungsgerät während des Betriebes bewegt, kann die Antriebsverbindung zwischen dem Bodenbearbeitungsgerät und dem Gebläse der Sämaschine ebenfalls starr ausgebildet sein. Der Antrieb des Gebläses erfolgt über einen Keilriementrieb, wobei sich die eine Keilriemenscheibe des Keilriementriebes auf dem Zapfwellendurchtrieb des angetriebenen Bodenbearbeitungsgerätes und die andere auf der Antriebswelle des Gebläses befindet.

Durch das deutsche Patent 31 05 641 ist eine landwirtschaftliche Bestellkombination, bestehend aus einem Bodenbearbeitungsgerät und einer hinter dem Bodenbearbeitungsgerät angeordneten Nachlaufwalze sowie einer abnehmbar aufgesattelten Sämaschine, deren Dosierorgan durch ein auf dem Boden abrollendes Element angetrieben wird, wobei die Sämaschine auf die Nachlaufwalze aufsattelbar ist, bekannt. Das Dosierorgan dieser Sämaschine wird durch ein auf dem Boden abrollendes und hinter der Nachlaufwalze angeordnetes Sporenrad angetrieben.

Der Erfindung liegt die Aufgabe zugrunde, die eingangs erwähnte Bestellkombination erheblich zu verbessern.

Diese Aufgabe wird erfindungsgemäß durch die kennzeichnenden Maßnahmen des Anspruches 1 gelöst.

Infolge dieser Maßnahmen kann das Bodenbearbeitungsgerät, wenn es auf im Boden festsitzende Hindernisse trifft und über diese hinweggezogen wird, sehr einfach nach oben ausweichen, weil nur das Gewicht des Bodenbearbeitungsgerätes angehoben werden muß. Von entscheidender Bedeutung ist bei der erfindungsgemäßen landwirtschaftlichen Bestellkombination, daß das Bodenbearbeitungsgerät gegenüber der Nachlaufwalze sich nach oben bewegen kann, ohne die Nachlaufwalze sowie die Schlepperhydraulikanlage angeschlossen ist, wodurch sich eine besonders einfache Antriebsmöglichkeit für das an der auf der gegenüber dem Bodenbearbeitungsgerät höhenbeweglich gelagerten Nachlaufwalze aufgesattelten Sämaschine angeordnete Gebläse ergibt.

Bei einer anderen Ausführungsform ist in erfindungsgemäßer Weise vorgesehen, daß das Bodenbearbeitungsgerät über eine Gelenkwelle von der Schlepperzapfwelle antreibbar ist, daß an dem Bodenbearbeitungsgerät eine angetriebene Zweigwelle vorgesehen ist, daß an die Zweigwelle eine Ölpumpe angeschlossen ist, welche den Ölmotor antreibt. Hierdurch wird eine weitere Antriebsmöglichkeit für die auf einer gegenüber dem Bodenbearbeitungsgerät höhenbeweglich gelagerten Nachlaufwalze aufgesattelten, mit einem Gebläse aufgestatteten Sämaschine geschaffen.

Eine weitere, erfindungsgemäße Ausbildung des Gebläses einer auf einer Nachlaufwalze aufgesattelten Sämaschine besteht darin, daß das Bodenbearbeitungsgerät über eine Gelenkwelle von der Schlepperzapfwelle antreibbar ist, daß an dem Bodenbearbeitungsgerät eine angetriebene Zweigwelle vorgesehen ist, daß zwischen der Zweigwelle und der Antriebswelle des Gebläses eine Gelenkwelle zum Antrieb des Gebläses angeordnet ist.

Diese unterschiedlich ausgebildeten Antriebsmöglichkeiten für das Gebläse einer auf einer Nachlaufwalze einer Bestellkombination ausgesattelten Sämaschine sind derart ausgelegt, daß sie auch bei einem Soloeinsatz dieser pneumatischen Sämaschine für den Antrieb des Gebläses geeignet sind.

Sämaschine mit anheben zu müssen. Hierdurch wird u.a. der entscheidende Vorteil erreicht, daß bei einem gewissen Ausheben des Bodenbearbeitungsgerätes aus dem Boden, wenn das Bodenbearbeitungsgerät über im Boden festsitzende Hindernisse hinweggezogen wird, bzw. aufgrund härterer Bodenschichten nicht so tief im Boden eindringen kann, die Nachlaufwalze auch dann noch immer Bodenkontakt hat bzw. aufgrund der aufgestattelten Sämaschine fest gegen den Boden gedrückt wird, so daß einerseits ein gutes Krümeln und Andrücken des Bodens gewährleistet bleibt, sowie ein sicherer Antrieb des Dosierogans in gleichmäßiger Weise sichergestellt ist, für die Fälle, in denen die Nachlaufwalze das Dosierorgan der Sämaschine antreibt. Des weiteren wird durch die erfindungsgemäßen Maßnahmen gewährleistet, daß je nach Ausbildung der Nachlaufwalze die Sämaschine jeweils von dem optimalen und vorteilhaftesten Antrieb angetrieben werden kann. So ist es beispielsweise von sehr großem Vorteil, da in einfacher Weise ohne ein zusätzliches Rad das Dosierorgan der Sämaschine von einer Nachlaufwalze, die beispielsweise als Reifenpacker, welcher aus nebeneinander angeordneten Reifen besteht, welche den Boden in nebeneinanderliegenden Streifen verdichten, unmittelbar sicher ohne großen Schlupf angetrieben werden kann. Andererseits ist es ohne weiteres möglich, daß bei anderen Nachlaufwalzen, die beispielsweise als Zahnpackerwalzen mit Abstreifern sowie als Stabwalze ausgebildet sind, die Dosierorgane der Sämaschine von auf dem Boden zusätzlich abrollenden Rädern (vorzugsweise einem Sporenrad oder Scheibensech) angetrieben werden. Andererseits ist es auch in äußerst einfacher Weise möglich, daß das Dosierorgan, falls die Sämaschine oder der die landwirtschaftliche Kombination ziehende Schlepper mit einer entsprechenden Regeleinrichtung ausgebildet ist, vom einer elektronischen, wegabhängigen Regelung steuer- oder regelbaren Kraftquelle angetrieben wird. Somit kann also dieselbe Sämaschine, in Serie gefertigt, auf verschiedenartige Nachlaufwalzen aufgesattelt sowie die Dosierorgane von verschidenen Organen angetrieben werden.

Erfindungsgemäß ist in einer Ausführungsform vorgesehen, daß die Nachlaufwalze als Reifenpacker ausgebildet ist, der aus mehreren nebeneinander angeordneten Gummireifen besteht, daß das Dosierorgan von dem Reifenpacker angetrieben wird, insbesondere wenn vor dem Reifenpacker eine vorverdichtende Glättschiene angeordnet ist. Infolge dieser Maßnahmen ist es ohne weiteres möglich, das Dosierorgan von der Nachlaufwalze selbst anzutreiben, weil der Reifenpacker nur einen sehr geringen Schlupf aufweist. Der Reifenpacker verdichtet den Boden streifenförmig, so daß er auch als Streifenpacker bezeichnet werden könnte.

In einer anderen erfindungsgemäßen Ausführungsform ist erfindungsgemäß vorgesehen, daß die Nachlaufwalze als Packerwalze mit zahnartigen Ansätzen und Abstreifern ausgebildet ist, daß das Dosierorgan der Sämaschine von einem zusätzlichen auf dem Boden abrollenden Rad, vorzugsweise einem Sporenrad angetrieben wird. Infolge dieser Maßnahme wird für Nachlaufwalzen, die als Packerwalzen ausgebildet sind, in einfacher Weise ein sicherer und schlupffreier sowie genauer Antrieb der Dosierorgane der Sämaschine erreicht.

Eine einfache Anordnung und Aufsattelung der Sämaschine auf die Bestellkombination wird erfindungsgemäß dadurch erreicht, daß die unteren Kupplungseinrichtungen zwischen dem Rahmen der Sämaschine und der Bodenwalze angeordnet sind, und daß die obere Kupplungseinrichtung zwischen der Drillmaschine und der Bodenbearbeitungsmaschine angeordnet ist.

Um in vorteilhafter Weise sowohl den Schwerpunkt der Bestellkombination für das Ausheben nach vorn zum Schlepper hin verlagern, so daß geringe Hubkräfte zum Ausheben erforderlich sind, wie auch eine Beschädigung der Säschare beim Wenden am Feldende zu vermeiden, ist erfindungsgemäß vorgesehen, daß der Oberlenker als Hydraulikzylinder ausgebildet ist, daß mittels des Hydraulikzylinders die Säschare um eine durch die unteren Kupplungseinrichtungen, welche als Gelenke ausgebildet sind, verlaufende Schwenkachse nach vorn schwenkbar ist.

Eine äußerst einfache Anordnung der Sämaschinen in der erfindungsgemäßen Bestellkombination wird dadurch erreicht, daß die Sämaschine fest auf den Tragarmen und/oder Tragrahmen der Nachlaufwalze aufgesattelt ist.

Um die Nachlaufwalze sowie die Sämaschine mit der Nachlaufwalze in einfacher Weise sicher aus dem Boden mit dem vorlaufenden Bodenbearbeitungsgerät ausheben zu können, ist erfindungsgemäß vorgesehen, daß zwischen dem Bodenbearbeitungsgerät und den Tragarmen und/oder Tragrahmen der Nachlaufwalze vorzugsweise längenveränderbare Spannelemente angeordnet sind.

Des weiteren ist in einer bevorzugten erfindungsgemäßen Ausführungsform vorgesehen, daß die Sämaschine Säschare aufweist, welche an einem hinter der Nachlaufwalze angeordneten Querbalken angelenkt sind, daß sich vor den Gelenken, mit dem die Säschare an den Querbalken angeordnet sind, ein aufrecht stehendes Schutzschild angeordnet ist.

Infolge dieser Maßnahmen ist es möglich, die Gelenke der Säschare sowie die Säschare sehr dicht, d.h. unmittelbar mit einem sehr kleinen Abstand hinter der Nachlaufwalze anzuordnen, ohne daß in irgendeiner Weise die Funktion der Säschare behindert wird. Des weiteren wird verhindert, daß von der Nachlaufwalze Boden- oder Pflanzenreste auf die Gelenke oder Säschare geworfen wird, wodurch die Bewegung der Säschare in aufrechter Ebene behindert sowie ein Verstopfen der Säschare gefördert werden könnte.

Dadurch, daß in erfindungsgemäßer Weise der Vorratsbehälter der Sämaschine sich oberhalb in dem von der Nachlaufwalze und dem Bodenbearbeitungsgerät begrenzten Bereich befindet, ergibt sich eine äußerst vorteilhafte kompakte Bauweise der Bestellkombination, wobei der Schwerpunkt sich sehr dicht bei den Kupplungselementen, mit welchen die Bestellkombination an den Dreipunktkraftheber eines Ackerschleppers ankuppelbar ist, befindet, so daß nur ein sehr geringer Hubkraftbedarf erforderlich ist.

Um in einfacher Weise bei Bestellkombinationen, bei denen die Sämaschine ein von einer Kraftquelle antreibbares Gebläse aufweist (Pneumatiksämaschine), welche auf gegenüber den Bodenbearbeitungsgeräten in Höhenrichtung bewegliche Nachlaufwalze angeordnet sind, in einfacher Weise einen Antrieb des Gebläses der Sämaschine zu gewährleisten, ist das Gebläse von einem Ölmotor antreibbar. Infolge dieser Maßnahme wird eine einfache Möglichkeit zum Antrieb des von einer Kraftquelle antreibbaren Gebläses, einer auf einer Nachlaufwalze einer Bestellkombination aufgestattelten Sämaschine geschaffen, wobei die Nachlaufwalze gegenüber dem Bodenbearbeitungsgerät höhenbeweglich gelagert ist. Hierbei ist vorgesehen, daß der Ölmotor an die Schlepperhydraulikanlage angeschlossen ist, wodurch sich eine besonders einfache Antriebsmöglichkeit für das an der auf der gegenüber dem Bodenbearbeitungsgerät höhenbeweglich gelagerten Nachlaufwalze aufgesattelten Sämaschine angeordnete Gebläse ergibt.

Bei einer anderen Ausführungsform ist in erfindungsgemäßer Weise vorgesehen, daß das Bodenbearbeitungsgerät über eine Gelenkwelle von der Schlepperzapfwelle antreibbar ist, daß an dem Bodenbearbeitungsgerät eine angetriebene Zweigwelle vorgesehen ist, daß an die Zweigwelle eine Ölpumpe angeschlossen ist, welche den Ölmotor antreibt. Hierdurch wird eine weitere Antriebsmöglichkeit für die auf einer gegenüber dem Bodenbearbeitungsgerät höhenbeweglich gelagerten Nachlaufwalze aufgesattelten, mit einem Gebläse aufgestatteten Sämaschine geschaffen.

Eine weitere, erfindungsgemäße Ausbildung des Gebläses einer auf einer Nachlaufwalze aufgesattelten Sämaschine besteht darin, daß das Bodenbearbeitungsgerät über eine Gelenkwelle von der Schlepperzapfwelle antreibbar ist, daß an dem Bodenbearbeitungsgerät eine angetriebene Zweigwelle vorgesehen ist, daß zwischen der Zweigwelle und der Antriebswelle des Gebläses eine Gelenkwelle zum Antrieb des Gebläses angeordnet ist.

Diese unterschiedlich ausgebildeten Antriebsmöglichkeiten für das Gebläse einer auf einer Nachlaufwalze einer Bestellkombination ausgesattelten Sämaschine sind derart ausgelegt, daß sie auch bei einem Soloeinsatz dieser pneumatischen Sämaschine für den Antrieb des Gebläses geeignet sind.

Weitere Einzelheiten der Erfindung sind der Beispielsbeschreibung sowie den Zeichnungen zu entnehmen. Hierbei zeigen

Fig. 1 eine erfindungsgemäße Bestellkombination, wobei die Sämaschine auf einer als Reifenpacker ausgebildeten Nachlaufwalze angeordnet ist, in der Seitenansicht,

Fig. 2 eine weitere erfindungsgemäße Bestellkombination, wobei die Sämaschine auf einer als Zahnpackerwalze mit Abstreifern ausgebildeten Nachlaufwalze aufge sattelt ist, ebenfalls in der Seitenansicht,

Fig. 3 eine weitere erfindungsgemäße Bestellkombination, wobei die Sämaschine auf einer als Reifenpacker ausgebildeten Nachlaufwalze aufgesattelt ist, in der Seitenansicht,

Fig. 4 eine weitere erfindungsgemäße Bestellkombination, wobei die Sämaschine auf einer als Reifenpacker ausgebildeten Nachlaufwalze aufgesattelt ist, in der Seitenansicht,

Fig. 5 eine weitere erfindungsgemäße Bestellkombination, wobei die Sämaschine auf die Tragarme einer als Zahnpackerwalze mit Abstreifern ausgebildeten Nachlaufwalze angeordnet ist, in der Seitenansicht,

Fig. 6 die erfindungsgemäß ausgerüstete Bestellkombination, wobei das Gebläse der Sämaschine von einem Ölmotor angetrieben wird, in Prinzipdarstellung und

Fig. 7 eine weitere, in erfindungsgemäßer Weise ausgerüstete Bestellkombination, wobei das Gebläse der Sämaschine über eine Gelenkwelle von der Zweigwelle des Bodenbearbeitungsgerätes angetrieben wird.

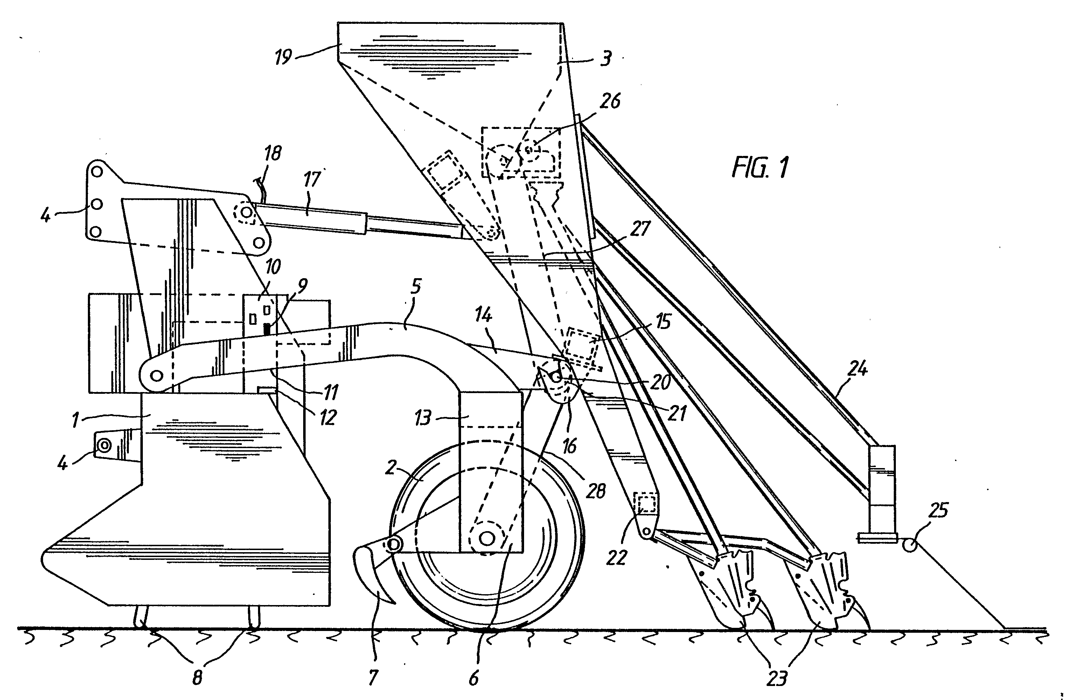

Die Bestellkombination gemäß Fig. 1 besteht aus dem Bodenbearbeitungsgerät 1, der Nachlaufwalze 2 sowie der Sämaschine 3. Das Bodenbearbeitungsgerät 1 ist über die vorderen Dreipunktkupplungselemente 4 in bekannter und daher nicht dargestellter Weise an den Dreipunktkraftheber eines Ackerschleppers anzukuppeln. Dieses Bodenbearbeitungsgerät 1 kann als zapfwellengetriebene Bodenbearbeitungsmaschine oder als gezogenes Bodenbearbeitungsgerät ausgebildet sein. Über die Tragarme 5 ist hinter dem Bodenbearbeitungsgerät 1 die Nachlaufwalze 2 angeordnet. Diese Nachlaufwalze 2 ist als Reifenpacker ausgebildet, wobei auf einem zentralen Tragrohr in Abständen zueinander mehrere Gummireifen aufgeschoben sind. Vor der Nachlaufwalze 2 ist an dem Rahmen 6 der Nachlaufwalze 2 die vorlaufende Glättschiene 7 angeordnet, welche insbesondere den von den Bodenbearbeitungswerkzeugen 8 des Bodenbearbeitungsgerätes 1 aufgelockerten und gekrümelten Boden vorverdichtet. Durch die Nachlaufwalze 2 wird der Boden anschließend verdichtet und weiter gekrümelt. Die Nachlaufwalze 2 bestimmt die Arbeitstiefe der Bodenbearbeitungswerkzeuge 8 des Bodenbearbeitungswerkzeuges 1. Über den Anschlag 9, der in verschiedene Aussparungen der Halterung 10 eingesetzt werden kann, läßt sich die Arbeitstiefe der Bodenbearbeitungswerkzeuge 8 bestimmen. Das Bodenbearbeitungsgerät 1 ist gegenüber der Nachlaufwalze 2 in einem gewissen Maße frei bewegbar nach oben angeordnet, so daß das Bodenbearbeitungsgerät 1, wenn die Bodenbearbeitungszinken 8 auf im Boden festsitzende Hindernisse auftreffen, nach oben ausweichen kann, ohne daß die Nachlaufwalze 2 mit angehoben wird. In dem Ausführungsbeispiel gemäß Fig. 1 kann das Bodenbearbeitungsgerät 1 sich soweit ohne die Walze anzuhalten frei nach oben bewegen, bis die Unterkante 11 des Tragarmes 5 an dem Anschlag 12 anliegt.

Auf dem Tragrahmen 13 der Nachlaufwalze 2 sind die beiden Halterungen 14 in einem Abstand zueinander befestigt. Über diese Halterungen 14 läßt sich die Sämaschine 3 auf die Nachlaufwalze über die am Rahmen 15 der Sämaschine 3 sich befindlichen Kupplungselemente 16, welche als Fanghaken ausgebildet sind, aufsatteln. Zwischen dem Bodenbearbeitungsgerät 1 und dem Rahmen der Sämaschine 3 ist der Oberlenker 17 angeordnet, welcher als Hydraulikzylinder ausgebildet ist. Über den Hydraulikzylinder 17, welcher über die Leitung 18 mit der Schlepperhydraulikanlage verbunden ist, läßt sich die Sämaschine 3, insbesondere der Vorratsbehälter 19 zum Ausheben der gesamten Bestellkombination nach vorn verschwenken, so daß der Gesamtschwerpunkt der Bestellkombination erheblich nach vorn verlagert wird. Hierbei schwenkt die Sämaschine 3 um die durch die Gelenke, welche von den Kupplungsteilen 16 und den Halterungen 14 gebildet werden, verlaufenden Schwenkachsen 20. An dem Rahmen 15 der Sämaschine sind über die Halterungen 21 und der Scharhalteschiene 22 die Säschare 23 angelenkt. Hinter den Säscharen 23 ist über eine Halterung 24 der Saatstriegel 25 angeordnet. Die Dosierorgane 26 der Sämaschine 3 werden über die beiden Kettentriebe 27 und 28 von einem Regelorgan von der Nachlaufwalze 2 angetrieben. Da die Sämaschine 3 mittels des Hydraulikzylinders 17 um die Schwenkachse 20 verschwenkbar ist, sind die Kettentriebe 27 und 28 durch zwei nebeneinander angeordneten Zahnrädern 29 kraftschlüssig miteinander verbunden.

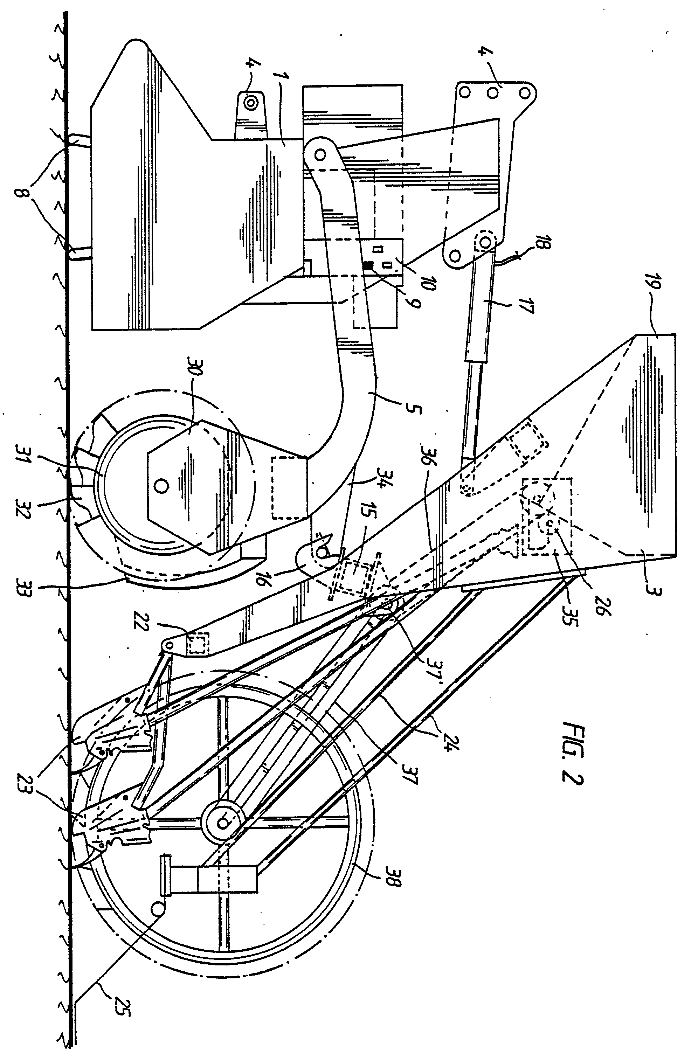

Die Bestellkombination gemäß Fig. 2 besteht aus dem Bodenbearbeitungsgerät 1, der Nachlaufwalze 30 sowie der aufgesattelten Sämaschine 3. Die Nachlaufwalze 30 ist als Packerwalze 31 mit den zahnartigen Ansätzen 32 und den Abstreifern 33 ausgebildet. Die Nachlaufwalze 30 ist über die Tragarme 5 mit dem Bodenbearbeitungsgerät 1 derart verbunden, daß sie über den Anschlag 9 die Arbeitstiefe der Bodenbearbeitungswerkzeuge 8 des Bodenbearbeitungswerkzeuges 1 bestimmt. Des weiteren ist das Bodenbearbeitungsgerät 1 im gewissen Maße gegenüber der Nachlaufwalze 30 frei nach oben beweglich angeordnet. Die Sämaschine 3, die genauso wie die Sämaschine 3 gemäß Fig. 1 ausgebildet ist, ist über die Kupplungselemente 16 und den Halteelementen 34, welche an den Tragarmen 5 der Nachlaufwalze befestigt sind, auf der Nachlaufwalze 30 aufgesattelt. Die Dosierorgane 26 werden über das Regelgetriebe 35, den Kettentrieben 36 und 37 von den am Rahmen der Sämaschine in aufrechter Ebene bewegbar angeordneten Nachlaufrad 38; welches als Sporenrad ausgebildet ist, angetrieben. Auch hier sind wiederum die beiden Kettentriebe 36 und 37 im Bereich der Schwenkachse, um welches das Sporenrad 38 nach oben schwenken kann, durch ein Doppelkettenrad 39 miteinander verbunden, so daß das Sporenrad 38 sich auf- und abbewegen kann bzw. die Sämaschine 3 über den Hydraulikzylinder 17 nach vorn verschwenkt werden, ohne daß eine Längenänderung der Kettentriebe eintritt. Es ist jedoch auch möglich, mit einem einzigen Kettentrieb von dem Sporenrad 38 aus das Regelgetriebe 35 anzutreiben, wenn eine durch eine Schwenkbewegung hervorgerufene Längenänderung durch einen federnd oder elastisch beaufschlagten Kettenspanner ausgeglichen wird.

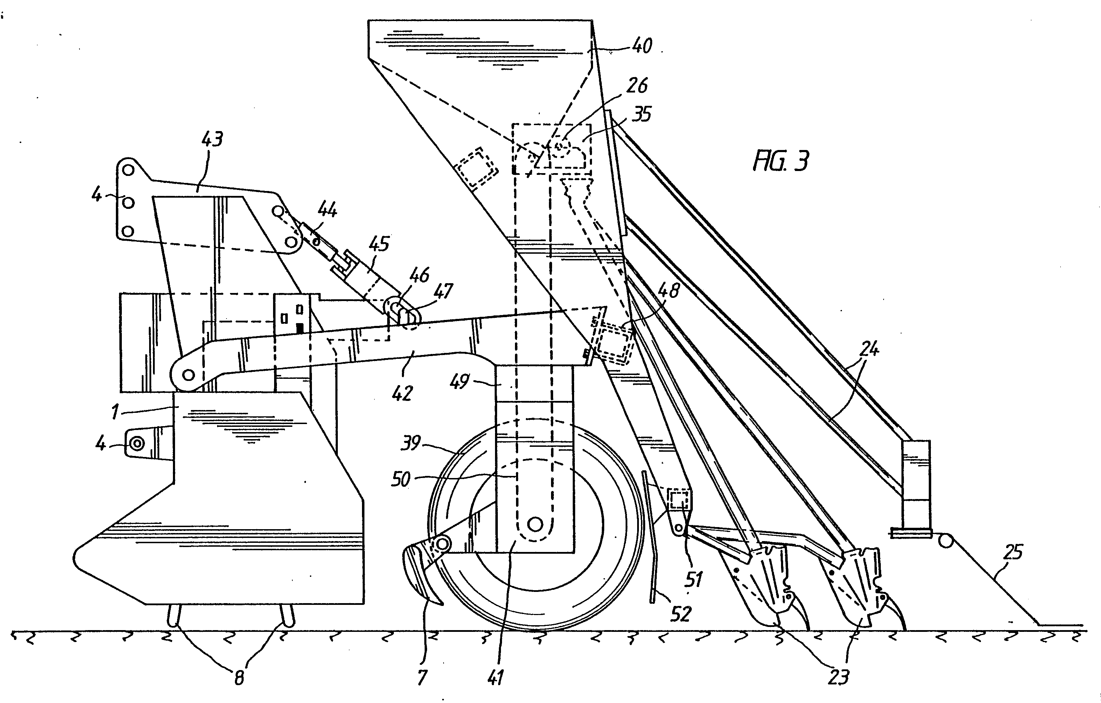

Die Bestellkombination gemäß Fig. 3 besteht aus dem Bodenbearbeitungsgerät 1, der Nachlaufwalze 39 und der Sämaschine 40. Die Nachlaufwalze 39 ist als Reifenpacker mit in einem Abstand nebeneinander auf einem Tragrohr aufgeschobenen Reifen ausgebildet. An dem Rahmen 41 der Nachlaufwalze 39 ist die vorlaufende Glättschiene 7 angeordnet, welche eine vorverdichtende Wirkung von den von den Bodenbearbeitungwerkzeugen 8 des Bodenbearbeitungsgerätes 1 aufgelockerten und gekrümelten Bodens hat. Die Nachlaufwalze 39 ist über die Tragarme 42 mit dem Bodenbearbeitungsgerät 1 in der Weise verbunden, daß sich das Bodenbearbeitungsgerät 1 gegenüber der Nachlaufwalze 39 im gewissen Maße frei nach oben bewegen kann. Zwischen dem Anbaubock 43 des Bodenbearbeitungsgerätes 1 und den beiden Tragarmen 42 sind die beiden einstellbaren Spannschlösser 44 sowie die Verbindungselemente 45 angeordnet. Über die Spannschlösser 44 und die Verbindungselemente 45 wird die Packerwalze, wenn das Bodenbearbeitungsgerät aus dem Boden ausgehoben wird, mit ausgehoben. Damit das Bodenbearbeitungsgerät 1 sich gegenüber der Nachlaufwalze 39 im gewissen Maße frei nach oben bewegen kann ohne die Walze mit auszuheben, weist das Verbindungselement 45 in seinem unteren Bereich das Langloch 46 auf, in welchem jeweils die bügelförmige Halterung 47, welche an den Tragarmen 42 der Nachlaufwalze 39 befestigt ist, faßt.

Die Sämaschine 40 über die Bügelschrauben 48 fest an den Tragarmen und somit an dem Tragrahmen 49 der Bodenwalze 39 befestigt. Somit ist also die Sämaschine 40 fest und unverschwenkbar gegen der Walze auf der Nachlaufwalze 39 aufgesattelt. Die Dosierorgane 26 der Sämaschine 40 werden über das Regelgetriebe 35 und den Kettentrieb 50 von der als Reifenpacker ausgebildeten Nachlaufwalze 39 angetrieben An dem Rahmen 51 der Sämaschine 40 ist das aufrecht stehend angeordnete Schutzschild 52 befestigt, welches über die gesamte Breite der Nachlaufwalze 39 reicht.

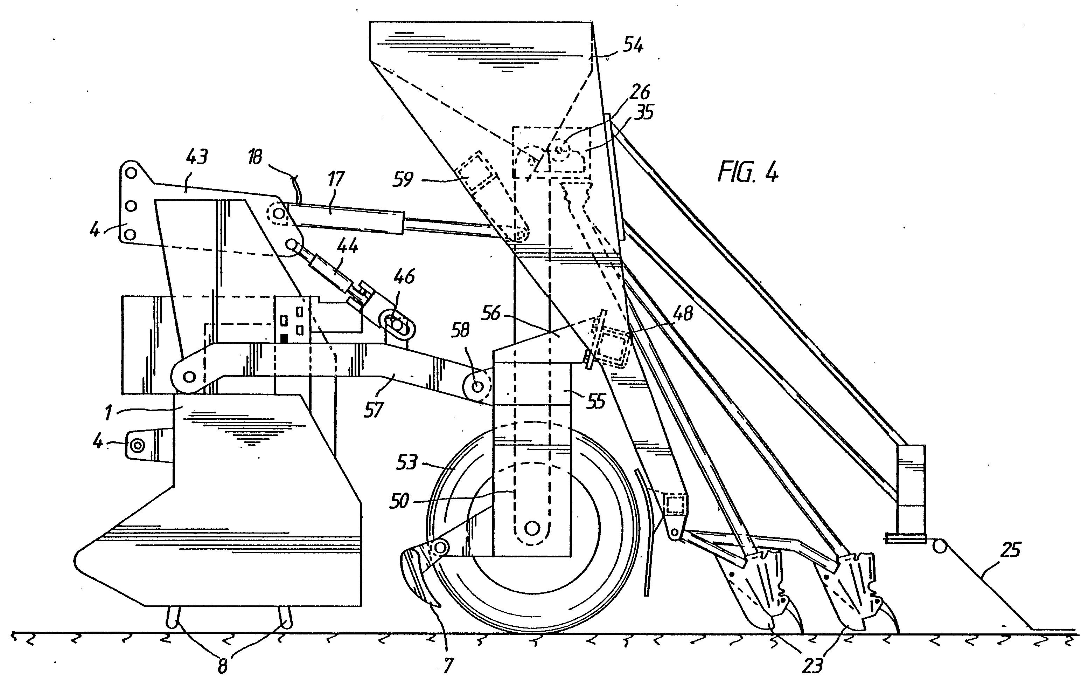

Die Bestellkombination gemäß Fig. 4 besteht aus dem vorlaufenden Bodenbearbeitungsgerät 1, der Nachlaufwalze 53, welche als Reifenpacker mit vorlaufender Glättschiene ausgebildet ist und der auf der Nachlaufwalze 53 aufgesattelten Sämaschine 54. Die Sämaschine 54 ist über die Bügelschrauben 48 und den auf dem Tragrahmen 55 die Nachlaufwalze 53 angeschweißten Halterungen 56 auf der Nachlaufwalze 53 aufgesattelt Die Nachlaufwalze 53 ist über die Tragarme 57 mit dem Bodenbearbeitungsgerät 1 verbunden. Zwischen den beiden in einem Abstand zueinander angeordneten Tragarmen 57 befinden sich die als Spannschlösser 44 ausgebildeten Spannelemente, welche derart ausgebildet sind, daß aufgrund des Langloches 46 sich das Bodenbearbeitungsgerät 1 in einem gewissen Maße frei gegenüber der Bodenwalze 53 nach oben bewegen kann. Die Tragarme 57 sind über die Gelenke 58 an dem Tragrahmen 55 der Nachlaufwalze 53 angelenkt. Zwischen dem Rahmen 59 der Sämaschine 54 und dem Dreipunktanbaubock 43 des Bodenbearbeitungsgerätes 1 ist der als Hydraulikzylinder 17 ausgebildete Oberlenker angeordnet Über diesen Hydraulikzylinder 17 läßt sich die Nachlaufwalze und die auf der Nachlaufwalze aufgesattelte Sämaschine 54 um die durch das Gelenk 58 verlaufende Schwenkachse verschwenken.

Hierdurch wird u.a. ein größerer Bodenabstand der Säschare 23 und des Saatstriegels 25 beim Ausheben der Bestellkombination beispielsweise zum Wenden am Feldende erreicht, wenn über den Hydraulickzylinder 17 die Sämaschine 54 nach vorn verschwenkt wird. Die Dosierorgane 26 werden über das Regelgetriebe 35 dem Kettentrieb 50 und der Walze 53 angetrieben.

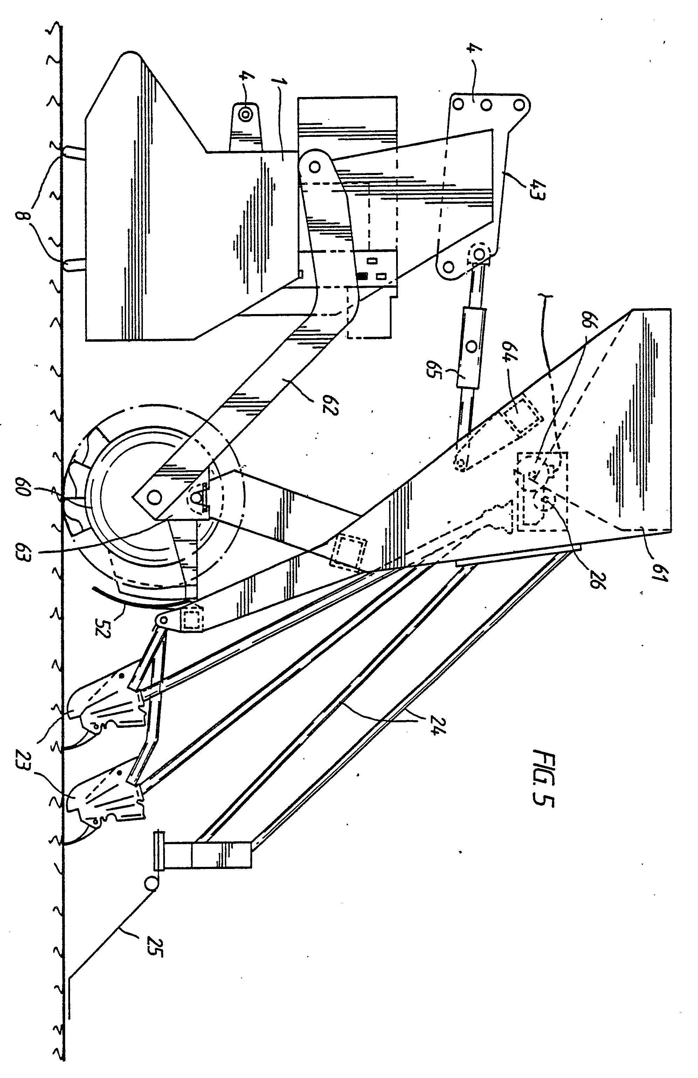

Die Bestellkombination gemäß Fig. 5 besteht aus dem Bodenbearbeitungsgerät 1 der als Packerwalze ausgebildeten Nachlaufwalze 60 sowie der Sämaschine 61. Die Nachlaufwalze 60 ist über die Tragarme 62 mit dem Bodenbearbeitungsgerät 1 verbunden. Über den Anschlag 9 läßt sich die Arbeitstiefe der Bodenbearbeitungswerkzeuge 8 bestimmen, wobei die Nachlaufwalze 60 die Arbeitstiefe der Bodenbearbeitungswerkzeuge 8 in Zusammenhang mit dem Anschlag 9 bestimmt. Des weiteren ist die Nachlaufwalze 60 derart mit dem Bodenbearbeitungsgerät 1 verbunden, so daß das Bodenbearbeitungsgerät 1 in gewissem Maße gegenüber der Bodenwalze 60 frei nach oben beweglich ist. An den Tragarmen 62, welche sich jeweils auf den äußeren Seiten der Nachlaufwalze 60 befinden, ist jeweils auf den beiden Tragarmen 62 das Kupplungselement 63 angeordnet, über welche die Sämaschine 61 auf die Nachlaufwalze aufsattelbar ist. Zwischen dem Rahmen 64 und dem Dreipunktanbaubock 43 des Bodenbearbeitungsgerätes 1 ist der längenveränderbare Oberlenker 65 angeordnet. Die Dosierorgane 26 der Sämaschine 61 werden über die als Elektro- oder Hydraulikmotor 66 ausgebildeten Kraftquelle angetrieben. Der Elektro- oder Hydraulikmotor 66 ist über eine elektronische wegabhängige Regelung regel- oder steuerbar, so daß die gewünschte Drehzahl der Dosierorgane 26 und somit die gewünschte Ausbringmenge in sehr einfacher Weise eingestellt und geregelt werden kann.

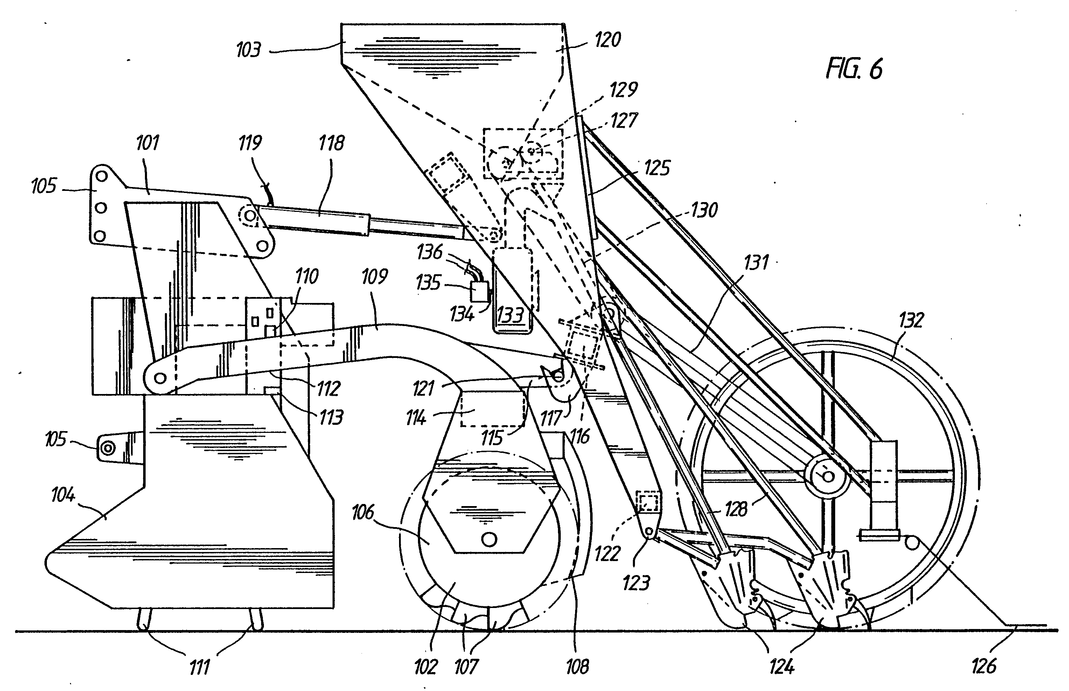

Die Bestellkombination gemäß Fig. 6 besteht aus dem Bodenbearbeitungsgerät 101, der Nachlaufwalze 102 sowie der auf die Nachlaufwalze 102 aufgesattelten Sämaschine 103. Das Bodenbearbeitungsgerät 101 ist als zapfwellengetriebene Bodenbearbeitungsmaschine 104 ausgebildet und über die vorderen Dreipunktkupplungselemente 105 in bekannter und daher nicht näher dargestellter Weise an den Dreipunktkraftheber eines Ackerschleppers anzukuppeln. Die Nachlaufwalze 102 ist als Packerwalze 106 mit den zahnartigen Ansätzen 107 sowie den Abstreifern 108 ausgebildet und derart über die Tragarme 109 mit dem Bodenbearbeitungsgerät 1 verbunden, daß sie über den Anschlag 110 die Arbeitstiefe der Bodenbearbeitungswerkzeuge 111 des Bodenbearbeitungsgerätes 1 bestimmt. Das Bodenbearbeitungsgerät 101 ist im gewissen Maße frei nach oben beweglich gegenüber der Nachlaufwalze 102 angeordnet, so daß das Bodenbearbeitungsgerät 1, wenn die Bodenbearbeitungswerkzeuge 111 auf im Boden festsitzende Hindernisse auftreffen, nach oben ausweichen kann, ohne daß die Nachlaufwalze 102 mit angehoben wird. In dem Ausführungsbeispiel kann das Bodenbearbeitungsgerät 101 sich so weit ohne die Walze 102 anzuheben frei nach oben bewegen, bis die Unterkante 112 des Tragarmes 109 an dem Anschlag 113 anliegt.

An dem Tragrahmen 114 der Nachlaufwalze 102 sind die beiden Halterungen 115 in einem Abstand zueinander befestigt. Über diese Halterungen 115 läßt sich die Sämaschine 103 auf die Nachlaufwalze 102 über die an ihrem Rahmen 116 sich befindlichen Kupplungselemente 117, welche als Fanghaken ausgebildet sind, aufsatteln. Zwischen dem Bodenbearbeitungsgerät 101 und dem Rahmen der Sämaschine 103 ist der als Hydraulikzylinder ausgebildete Oberlenker 118, angeordnet. Über den Hydraulikzylinder 118 welcher über die Leitung 119 mit der Schlepperhydraulikanlage verbunden ist, läßt sich die Sämaschine 103, insbesondere der Vorratsbehälter 120, beim Ausheben der gesamten Bestellkombination nach vorn verschwenken, so daß der Gesamtschwerpunkt der Bestellkombination erheblich in Richtung auf den die Bestellkombination tragenden Ackerschlepper verlagert wird. Hierbei schwenkt die Sämaschine 103 um die durch die Gelenke, welche von den Kupplungsteilen 117 und den Halterungen 115 gebildet werden, verlaufende Schwenkachse 121. An dem Rahmen 116 der Sämaschine 103 sind über die Halterungen 122 und der Scharhalteschiene 123 die Säschare 124 angelenkt. Hinter diesen Säscharen 124 ist über die Halterung 125 der Saatstriegel 126 angeordnet. Die Dosierorgane 127, die den jeweiligen Saatleitungsrohren 128 zugeordnet sind, werden über das Regelgetriebe 129, den Kettentrieben 130 und 131 von dem am Rahmen der Sämaschine in aufrechter Ebene bewegbar angeordneten Nachlaufrad 132, welches als Sporenrad ausgebildet ist, angetrieben. Das aus dem Vorratsbehälter 120 mittels der Dosierorgane 127 in die Saatleitungsrohre 128 dosierte Saatgut wird mit Hilfe des von dem an der Sämaschine 103 angeordneten Gebläses 133 erzeugten Luftstromes zu den Säscharen 124 gefördert. Das an der Sämaschine 103 angeordnete Gebläse 133 wird von dem auf der Antriebswelle 134 des Gebläses 133 angeordneten Hydrauliköhlmotors 135 angetrieben. Dieser Hydrauliköhlmotor 135 ist über die Hydraulikleitungen 136 mit dem Hydrauliksystem des die Bestellkombination tragenden Ackerschleppers verbunden.

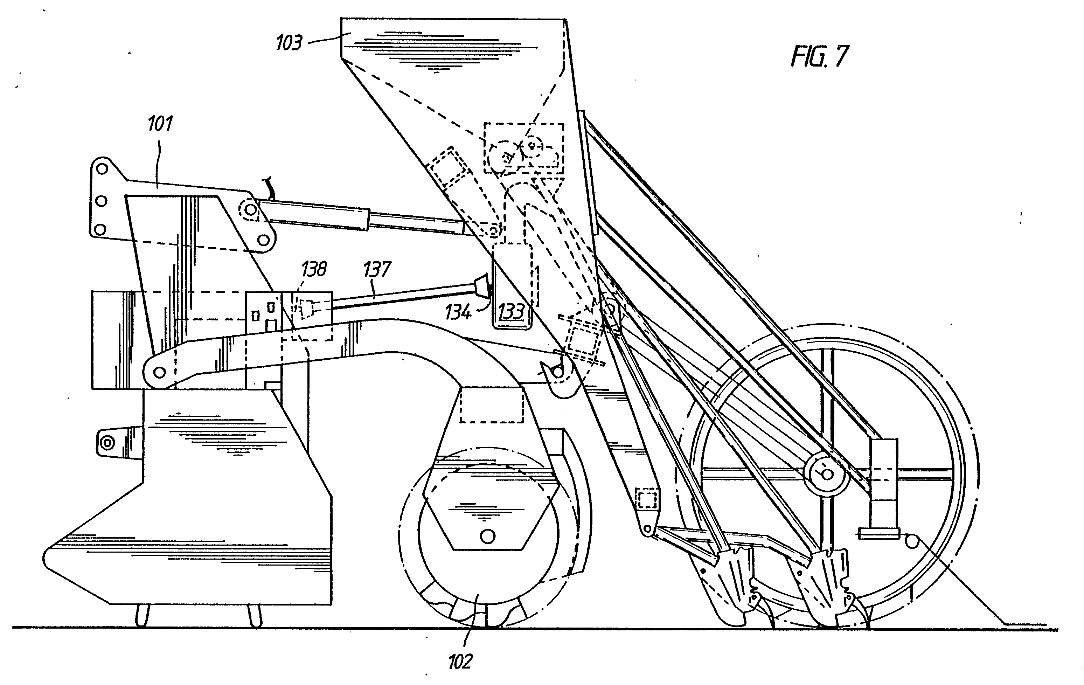

Die Bestellkombination gemäß Fig. 7 unterscheidet sich nur durch einen andersartig ausgebildeten Antrieb für das auf der Sämaschine 103 angeordnete Gebläse 133. Auf der Antriebswelle 134 des Gebläses 135 ist die Gelenkwelle 137 angeordnet, die auf die Zweigwelle 138 des Bodenbearbeitungsgerätes 101 aufgesteckt ist, und treibt die Antriebswelle 134 des Gebläses an, wenn das Bodenbearbeitungsgerät über eine von der Schlepperzapfwelle angetriebenen Gelenkwelle angetrieben wird.

**Ansprüche**

1. Landwirtschaftliche Bestellkombination, bestehend aus einem Bodenbearbeitungsgerät, einer hinter dem Bodenbearbeitungsgerät angeordneten Nachlaufwalze, welche über Tragarme derart mit dem vorlaufenden Bodenbearbeitungsgerät verbunden ist, daß sich das Bodenbearbeitungsgerät gegenüber der Nachlaufwalze in einem gewissen Maße frei nach oben bewegen kann, sowie einer abnehmbaren aufgesattelten Sämaschine, deren Dosierorgan durch ein auf dem Boden abrollendes Element angetrieben wird, wobei die Sämaschine auf verschiedenartig ausgebildeten Bodenbearbeitungsgeräten mit verschiedenen Nachlaufwalzen aufsattelbar ist, dadurch gekennzeichnet, daß die Sämaschine auf die Nachlaufwalzen direkt aufsattelbar ist, daß die Sämaschine mittels Kupplungselementen mit der Nachlaufwalze bzw. deren Tragarme oder Tragrahmen kuppelbar ist, daß die Sämaschine (3,40,54,61) auf verschiedenartig ausgebildete Nachlaufwalzen (2,30,53,60) unmittelbar aufsattelbar ist, wobei je nach Ausbildung der Nachlaufwalze (2,30,53,60) das Dosierorgan (26) der Sämaschine (3,40,54,61) von der Nachlaufwalze (2,39,53) oder von einem zusätzlichen, auf dem Boden abrollenden Rad (38) oder von einer anderen, vorzugsweise mit einer elektronischen, wegabhängigen Regelung regel- oder steuerbaren Kraftquelle (66) angetrieben wird.

2. Bestellkombination nach Anspruch 1, dadurch gekennzeichnet, daß die Nachlaufwalze (2,39,53) als Reifenpacker ausgebildet ist, der aus mehreren nebeneinander angeordneten Gummireifen besteht, daß das Dosierorgan (26) von dem Reifenpacker angetrieben wird, insbesondere wenn vor dem Reifenpacker eine vorverdichtende Glättschiene angeordnet ist.

3. Bestellkombination nach Anspruch 1, dadurch gekennzeichnet, daß die Nachlaufwalze (30) als Packerwalze mit zahnartigen Ansätzen (32) und Abstreifern (33) ausgebildet ist, daß das Dosierorgan (26) der Sämaschine (3) von einem zusätzlichen, auf dem Boden abrollenden Rad (38), vorzugsweise einem Sporenrad, angetrieben wird.

4. Bestellkombination nach Anspruch 1, dadurch gekennzeichnet, daß die unteren Kupplungseinrichtungen (14,16,29,48,63) zwischen dem Rahmen der Sämaschine (3,54,61) und der Bodenwalze (2,30,53,60) angeordnet sind, und daß die obere, Kupplungseinrichtung (17,65) zwischen der Sämaschine (3,54,61) und der Bodenbearbeitungsmaschine (1) angeordnet ist.

5. Bestellkombination nach Anspruch 4, dadurch gekennzeichnet, daß der Oberlenker als Hydraulikzylinder (17) ausgebildet ist, daß mittels des Hydraulikzylinders (17) die Säschare um eine durch die unteren Kupplungseinrichtungen (14,16,58,63), welche als Gelenke ausgebildet sind, verlaufende Schwenkachse nach vorn schwenkbar ist.

6. Bestellkombination nach Anspruch 1, dadurch gekennzeichnet, daß die Sämaschine (40,54) fest auf den Tragarmen und/oder Tragrahmen der Nachlaufwalze (39,53) aufgesattelt ist.

7. Bestellkombination nach Anspruch 1, 4 oder 6 dadurch gekennzeichnet, daß zwischen dem Bodenbearbeitungsgerät (1) und dem Tragarmen (42,57) und/oder Tragrahmen der Nachlaufwalze (39,53) vorzugsweise längenveränderbare Spannelemente (44) angeordnet sind.

8. Bestellkombination nach Anspruch 1, dadurch gekennzeichnet, daß die Sämaschine Säschare (23) aufweist, welche an einem hinter der Nachlaufwalze (39,53,60) angeordneten Querbalken angelenkt sind, daß sich vor den Gelenken, mit dem die Säschare (23) an dem Querbalken angeordnet sind, ein aufrecht stehendes Schutzschild (52) angeordnet ist.

9. Bestellkombination nach Anspruch 1, dadurch gekennzeichnet, daß der Vorratsbehälter (19) der Sämaschine (3,40,54,61) sich oberhalb in dem von der Nachlaufwalze und dem Bodenbearbeitungsgerät (1) begrenzten Bereich befindet.

10. Landwirtschaftliche Bestellkombination, bestehend aus einem Bodenbearbeitungsgerät, einer hinter dem Bodenbearbeitungsgerät angeordneten Nachlaufwalze, welche über Tragarme derart mit dem vorlaufenden Bodenbearbeitungsgerät verbunden ist, daß sich das Bodenbearbeitungsgerät gegenüber der Nachlaufwalze in einem gewissen Maße frei nach oben bewegen kann, sowie einer abnehmbaren aufgesattelten Sämaschine, deren Dosierorgan durch ein auf dem Boden abrollendes Element angetrieben wird, wobei die Sämaschine auf verschiedenartig ausgebildeten Bodenbearbeitungsgeräten mit verschiedenen Nachlaufwalzen aufsattelbar ist, wobei die Sämaschine mittels Kupplungselemente auf verschiedenartig ausgebildete Nachlaufwalzen unmittelbar aufsattelbar ist, die gegenüber dem Bodenbearbeitungsgerät höhenbeweglich gelagert sind, so daß das Bodenbearbeitungsgerät gegenüber der Walze nach oben ausweichen kann, wobei die Sämaschine ein von einer Kraftquelle antreibbares Gebläse aufweist, insbesondere nach Anspruch 1, dadurch gekennzeichnet, daß das Gebläse (133) von einem Ölmotor (135) antreibbar ist.

11. Bestellkombination nach Anspruch 10, dadurch gekennzeichnet, daß das Bodenbearbeitungsgerät (101) über eine Gelenkwelle von der Schlepperzapfwelle antreibbar ist, daß an dem Bodenbearbeitungsgerät (101) eine angetriebene Zweigwelle (138) vorgesehen ist, daß an die Zweigwelle (138) eine Ölpumpe angeschlossen ist, welche den Ölmotor (135) antreibt.

12. Bestellkombination nach Anspruch 10, dadurch gekennzeichnet, daß der Ölmotor (135) an die Schlepperhydraulikanlage angeschlossen ist.

13. Bodenbearbeitungskombination bestehend aus einem Bodenbearbeitungsgerät, einer hinter dem Bodenbearbeitungsgerät angeordneten Nachlaufwalze, welche über Tragarme derart mit dem vorlaufenden Bodenbearbeitungsgerät verbunden ist, daß sich das Bodenbearbeitungsgerät gegenüber der Nachlaufwalze in einem gewissen Maße frei nach oben bewegen kann, sowie einer abnehmbaren aufgesattelten Sämaschine, deren Dosierorgan durch ein auf dem Boden abrollendes Element angetrieben wird, wobei die Sämaschine auf verschiedenartig ausgebildeten Bodenbearbeitungsgeräten mit verschiedenen Nachlaufwalzen aufsattelbar ist, wobei die Sämaschine mittels Kupplungselemente auf verschiedenartig ausgebildete Nachlaufwalzen unmittelbar aufsattelbar ist,die gegenüber dem Bodenbearbeitungsgerät höhenbeweglich gelagert sind, so daß das Bodenbearbeitungsgerät gegenüber der Walze nach oben ausweichen kann, wobei die Sämaschine ein von einer Kraftquelle antreibbares Gebläse aufweist, insbesondere nach Anspruch 1, dadurch gekennzeichnet, daß das Bodenbearbeitungsgerät (101) über eine Gelenkwelle von der Schlepperzapfwelle antreibbar ist, daß an dem Bodenbearbeitungsgerät (101) eine angetriebene Zweigwelle (138) vorgesehen ist, daß zwischen der Zweigwelle (138) und der Antriebswelle (134) des Gebläses (133) eine Gelenkwelle (137) zum Antrieb des Gebläses (137) angeordnet ist.

FIG. 1

FIG. 2

FIG. 3

FIG. 4

FIG. 5

EP 0 310 856 A2

FIG. 6

EP 0 310 856 A2

FIG. 7